# EUROPEAN PATENT APPLICATION

(11) **EP 4 589 511 A1**
(43) Date of publication of application: **23.07.2025**
(21) Application number: 24186983.3
(22) Date of filing: 07.07.2024
(51) Int. Cl.: G06Q 10/087, B65G 1/137, B65G 1/04

(54) **A METHOD OF COLLECTING DATA ON CONTAINER CONTENT**

(30) Priority: 22.01.2024 US 202463623407 P
(71) Applicant: AutoStore Technology AS, 5578 Nedre Vats (NO)
(72) Inventor: Latsch, Steven, 5578 Nedre Vats (NO)
(74) Representative: Kilburn & Strode LLP

(57) **Abstract**

The disclosure relates to a computer-implemented method, in an automated storage and retrieval system comprising a storage grid including a plurality of stacked containers, of collecting data on container content, comprising: controlling a robotic vehicle on the storage grid to lift a first one of the plurality of stacked containers out of the storage grid; responsive to the controlling, capturing data indicative of a content of the first container using a sensor of the robotic vehicle; and storing the captured data in association with a unique identifier of the first container.

## Description

### TECHNICAL FIELD

The disclosure relates to a method of collecting data on container content. More particularly, it relates to a computer-implemented method of collecting data relating to the content of containers in an automated storage and retrieval system and to a system and computer-readable medium for performing said method.

### BACKGROUND

Traditional storage solutions usually involve the arrangement of goods on rows of shelves within a warehouse. The shelf location for each item is recorded in an inventory, and goods are retrieved from the shelves by a stock picker. The shelves are restocked and the inventory updated, as needed, as goods enter and leave the warehouse.

Warehouse workers may be assisted by robotic pickers and by automated inventory management systems. Automated transit systems may also be implemented in traditional warehouse set-ups to move goods from their inventory location to a picking and/or packing station.

An alternative to a traditional warehouse set-up is an automated storage and retrieval system in which robots retrieve items from their logged location within the warehouse and deliver the items to a packing station or port. Such systems can reduce or eliminate the space needed to pass between rows of shelves to access stock, thereby removing the need for broad aisles within the warehouse. One example of such a system involves placing goods in bins or containers that are configured to be stacked, side by side, within a three-dimensional grid. A rail system is arranged on top of the grid, along which robotic container-handling vehicles configured to lift containers from the grid can travel. The container-handling vehicles are configured to transport containers from the grid and to deliver them to ports or stations at the periphery of the grid so that the goods within the container can be picked and packed.

Given the vast selection of items that can be stored in the automated storage and retrieval system, it can be difficult to monitor the location and status of items. Depending on the items that are stored in the containers of the grid, the status and quality of the items might change or deteriorate over time. If, when the container arrives at the port, the product is damaged, spoiled or otherwise unsuitable for picking, this delays the picking and packing process and can reduce efficiency.

One or more aspects of the invention of the present application are set out in the claims.

### BRIEF DESCRIPTION OF THE DRAWINGS

The disclosure will now be described in more detail in connection with a number of exemplary embodiments shown in the accompanying drawings, in which:
Fig. 1 shows a perspective view of a storage system comprising a grid and a plurality of robotic container-handling vehicles configured to retrieve and/or rearrange goods stored within the grid;
Fig. 2 shows a top view of the system of Fig. 1;
Fig. 3A shows a side view of a first robotic container-handling vehicle suitable for use in the system of Fig. 1;
Fig. 3B shows a side view of a second robotic container-handling vehicle suitable for use in the system of Fig. 1;
Fig. 3C is a top perspective side view of the robot of Fig. 3B;
Fig. 4 shows a computing device for implementing the operations described herein;
Fig. 5 shows a bottom perspective view of a robot of the type shown in Fig. 3B;
Fig. 6 shows a flow chart of a method for collecting data on container content;
Fig. 7 shows a flow chart of a method for processing collected data on container content.

### DETAILED DESCRIPTION

In overview, the disclosure relates to a method for collecting data relating to the content of bins in an automated storage and retrieval system without the need for bins to be removed from the system and manually inspected. As a robot moves bins around the grid, it may lift them up out of the grid to transport them to another location. This lifting may be used to trigger a sensor which captures data on the content of the bin. As a result, data pertaining to the content of the bin can be collected, irrespective of whether the bin is later taken to a port for picking or whether it remains in the grid. The robot continues to move the bin as instructed and the data can be processed and used to monitor the status of the contents of the bin. A container thus need not be presented to a port to get an indication of the quality or status of its contents. For example, if groceries are stored in the container, they may spoil over time, in a way that cannot be easily predicted. To avoid spoiled groceries being presented to the port for picking, they can be monitored whilst still inside the grid, whenever the bin housing the groceries is moved by a robot.

### Automated storage and retrieval system overview

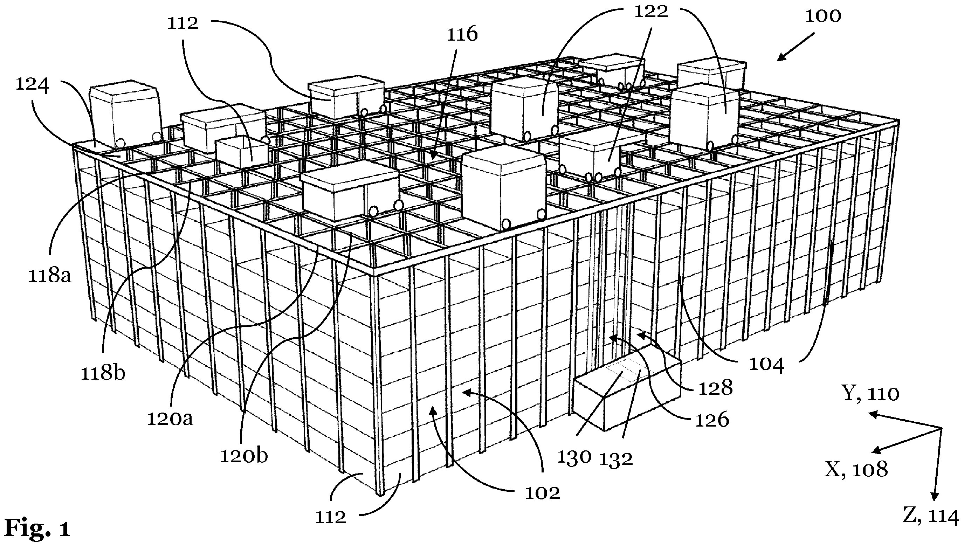

Referring to the embodiment shown in Fig. 1, a grid 100 comprises a frame formed by a plurality of generally rectilinear, adjacent vertical columns 102 formed between vertical frame members 104 and extending in the X and Y directions 108, 110. The grid elements may be fabricated of any appropriate material; for example, the frame members may be formed of extruded aluminium. Bins (or 'storage containers', or 'containers') 112 are stacked on top of each other, preferably in a self-supporting manner, in the Z direction 114 in the columns 102, forming a storage volume of storage cells for respective bins 112 extending in the X, Y and Z directions 108, 110, 114.

A rail system or network 116 is formed on top of the grid 100 and comprises pairs of vehicle rails or tracks 118a, 118b and 120a, 120b, respectively extending in the X and Y directions 108, 110. Robotic container-handling vehicles (or 'robots', or 'robotic vehicles') 122, which can be of a range of size, shape and function, are provided and configured to run on the rails 118, 120 and to transport bins 112 in both the X and Y directions 108, 110. The robots 122 are additionally configured to lift and lower bins 112 from/into the columns 102 in the Z direction 114, the bins 112 optionally being guided by the vertical frame members 104. The robots 122 access the bins 112 via access openings 124 above the columns 102 and formed between the rails 118, 120.

Some columns 102 may be used for alternative purposes than bin storage. For example, port columns 126, 128 comprise port or access columns allowing transfer of a bin 112 in and/or out of the grid 100. Port columns 126, 128 provide a vertical channel for lifting of a bin 112 from, or lowering of a bin 112 to, a port or ports 130, 132. The ports 130, 132 are shown in Fig. 1 at the lowest level of the grid, however ports can be located at any vertical position along the column. The respective port columns 126, 128 can be assigned for removing ('drop-off) and/or returning or delivering ('pick-up') bins 112 from/to the grid 100. The ports 130, 132 are therefore configured to allow bins 112 to be removed and reintroduced (horizontally) into the associated port column. As such, a port 130, 132 can comprise a conveyor (not shown in Fig. 1) onto which a bin 112 may be lowered and transported horizontally out of the port column. The port columns 126, 128 include an opening or access point through which bins 112 can enter and leave the column.

Bins 112 can be transported along the top of the grid 100 to and/or from a port column 126, 128 by robots 122, and from a port 130, 132 to a location outside the grid 100, which may be an access station (not shown) for processing of the bin 112 or its contents, such as a picking station for adding content to, or removing content from, the bin 112. In alternative examples (not shown), the bin 112 may be transported to a port of another grid on the same or another level, or to an external facility. Transport of bins 112 to and from ports 130, 132 may be by any appropriate means (not shown) including conveyors, transport vehicles, lifts or robots.

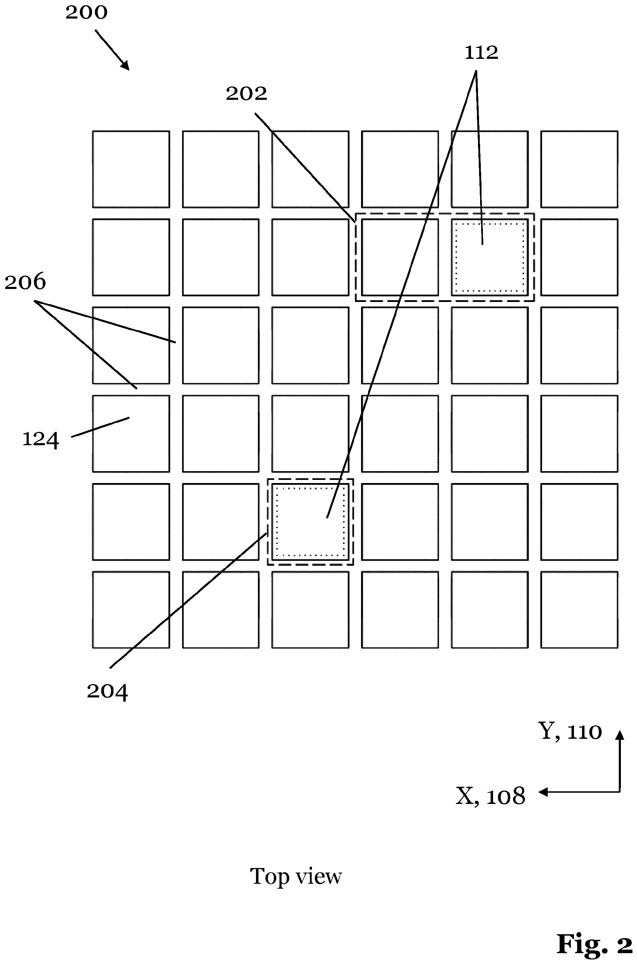

Referring to the embodiment shown in Fig. 2, the X-Y configuration 200 of the rail system 116 can be seen in more detail, together with robots 202, 204 of different types. The rail system includes rails 206 defining between them vertical column access openings 124 for access to bins 112. The rails 206 can be any appropriate type for permitting travel of the robots 202, 204 in the X and Y directions 108, 110 thereon, including (not shown) groove-type rails for receiving vehicle wheels, or protrusion-type rails for engaging wheel recesses. Each rail 206 may comprise a single track or multiple parallel tracks in each of the X and Y directions 108, 110.

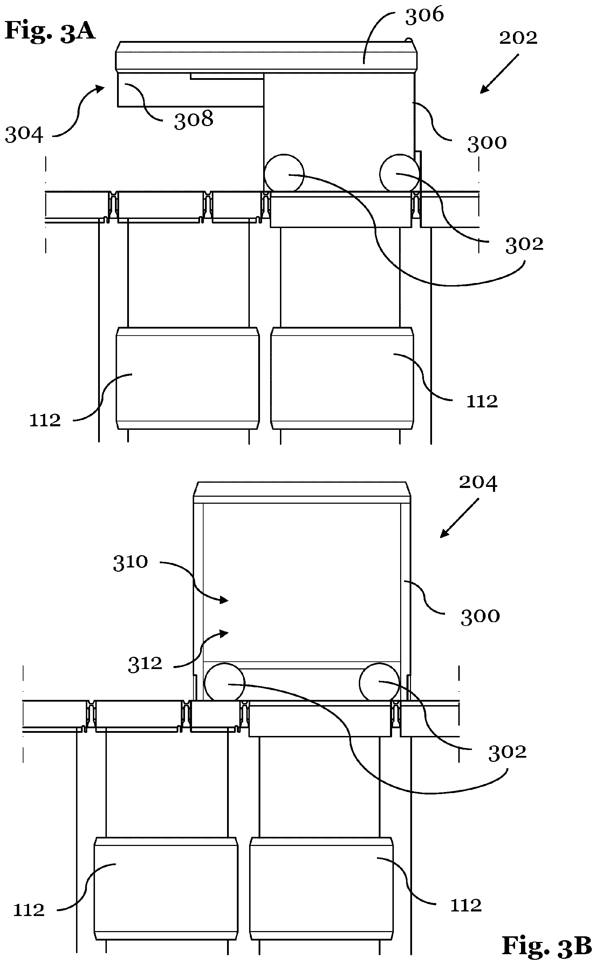

A first, 'cantilever' type of robot 202 is shown in more detail in Fig. 3A and includes a body 300, a set of wheels 302 and a lifting device 304. The body 300 contains operational equipment (not shown) for the robot 202 including drive, power and control systems. The wheels 302 permit movement of the robot 202 in one of the X and Y directions, an additional set of wheels (not visible in this view) permitting movement in the other of the X and Y directions, in both cases along the respective rails or tracks 206. One or both sets of wheels can be raised or lowered to permit selective engagement of the rails for movement in the desired direction. The lifting device 304 includes a cantilever element 306 extending in the X-Y plane from the top of the body 300, and a gripping device 308, which is raisable and lowerable from the cantilever element 306. The gripping device 308 is configured to grip or engage a bin 112; for example, by gripping a part of the bin 112, or by passively or actively engaging a suitably configured part of the bin 112.

A second, 'internal cavity' type of robot 204 is shown in more detail in Fig. 3B and includes, as an alternative to the cantilevered lifting system, an internal cavity 310 within the body 300 and in which the lifting device 312 including a gripping device (not shown) is located. In this case, the body 300 includes the robot's operational equipment and a storage space for one or more bins 112, for use, for example, while transporting the bin 112.

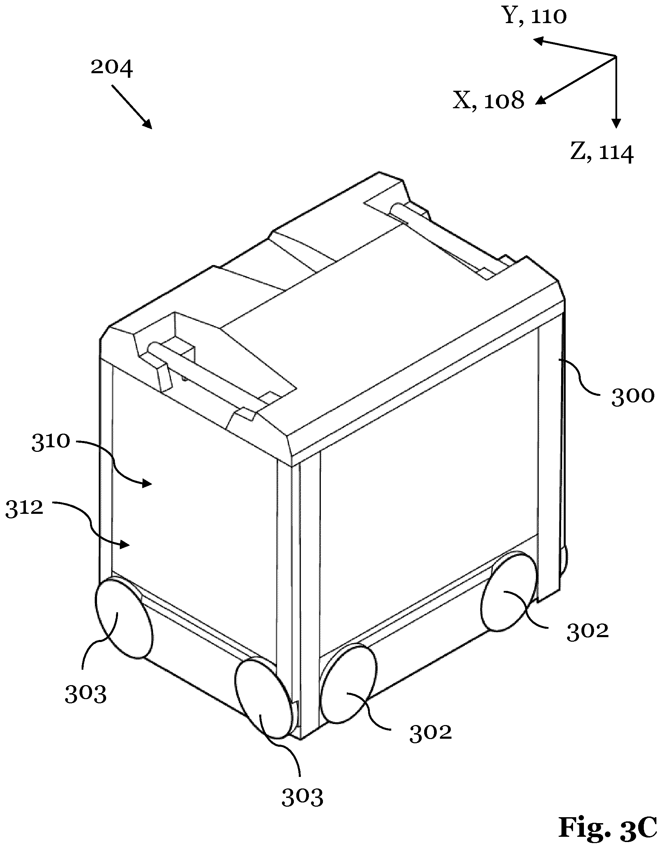

Fig. 3C shows a perspective side view of the robot of Fig. 3B in which the first set of wheels 302 from Fig. 3B are visible. The additional set of wheels referenced above but not shown in Fig. 3B are shown as wheels 303 in Fig. 3C. The additional set of wheels 303 is arranged perpendicular to the first set of wheels 302, to allow rolling of the robot 204 in the X and Y directions on the first and second set of wheels 302, 303 respectively. The first and second set of wheels 302, 303 shown in Fig. 3C may be configured to be independently lowered into engagement with the rails (and conversely raised out of engagement with the rails) to allow the robot 202 to move in the X and Y direction across the arrangement of rails shown in Fig. 2. Although the perspective view shown in Fig. 3C is of the robot 204 of Fig. 3B, it will be appreciated that a similar perpendicular wheel arrangement may be applied to the robot 202 of Fig. 3A.

### Control and monitoring system

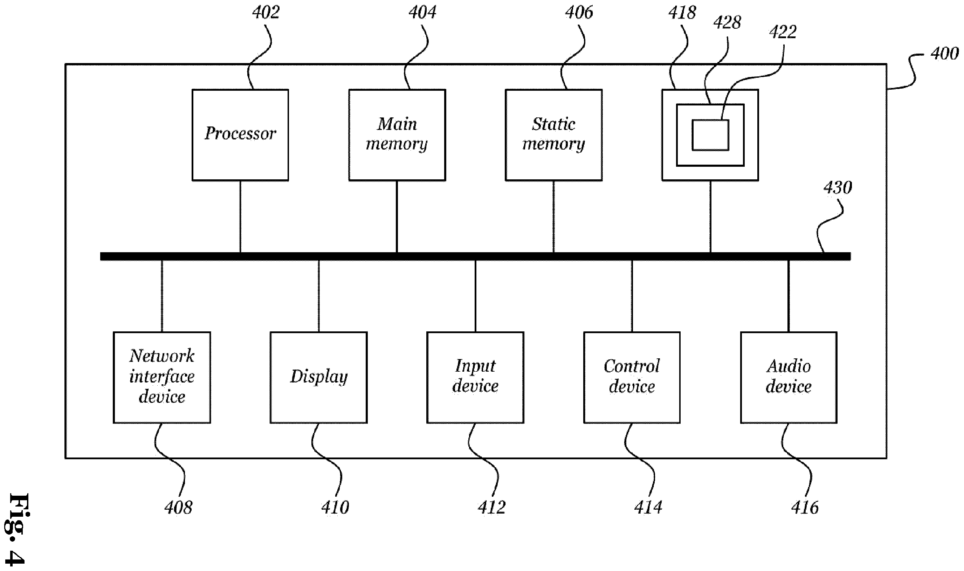

Control and monitoring of the automated storage and retrieval system, including monitoring and storing bin position and controlling bin delivery, retrieval and transport and robot routing and collision avoidance, is performed by a control system shown in Fig. 4 in communication with the robots and/or other controllable system components. Control can be performed locally or remotely and may be implemented by a processing system, for example in the form of a computing device. Accordingly, the methods described herein may form all or part of a computer-implemented method, or a system configured to perform the methods described herein.

With reference to Fig. 4, a processing system 400 suitable for carrying out the methods described herein will now be described. Fig. 4 shows a block diagram of one implementation of a processing system 400 in the form of a computing device within which a set of instructions for causing the computing device to perform any one or more of the methods described herein may be executed. In some implementations, the computing device may be connected (e.g., networked) to other machines in a Local Area Network (LAN), an intranet, an extranet, or the Internet. The computing device may operate in the capacity of a server or a client machine in a client-server network environment, or as a peer machine in a peer-to-peer (or distributed) network environment. The computing device may be a personal computer (PC), a tablet computer, a set-top box (STB), a Personal Digital Assistant (PDA), a cellular telephone, a web appliance, a server, a network router, switch or bridge, or any machine capable of executing a set of instructions (sequential or otherwise) that specify actions to be taken by that machine. Further, while only a single computing device is illustrated, the term 'computing device' shall also be taken to include any collection of machines (e.g., computers) that individually or jointly execute a set (or multiple sets) of instructions to perform any one or more of the methods described herein.

The example processing system 400 includes a processor 402, a main memory 404 (e.g., read-only memory (ROM), flash memory, dynamic random-access memory (DRAM) such as synchronous DRAM (SDRAM) or Rambus DRAM (RDRAM), etc.), a static memory 406 (e.g., flash memory, static random-access memory (SRAM), etc.), and a secondary memory (e.g., a data storage device 418), which communicate with each other via a bus 430.

Processor 402 represents one or more general-purpose processors such as a microprocessor, central processing unit, or the like. More particularly, the processor 402 may be a complex instruction set computing (CISC) microprocessor, reduced instruction set computing (RISC) microprocessor, very long instruction word (VLIW) microprocessor, processor implementing other instruction sets, or processors implementing a combination of instruction sets. Processor 402 may also be one or more special-purpose processors such as an application specific integrated circuit (ASIC), a field programmable gate array (FPGA), a digital signal processor (DSP), network processor, or the like. Processor 402 is configured to execute the processing logic (instructions 422) for performing the operations and steps described herein.

The processing system 400 may further include a network interface device 408. The processing system 400 also may include any of a video display unit 410 (e.g., a liquid crystal display (LCD) or a cathode ray tube (CRT)), an alphanumeric input device 412 (e.g., a keyboard or touchscreen), a cursor control device 414 (e.g., a mouse or touchscreen), and an audio device 416 (e.g., a speaker).

It will be apparent that some features of the processing system 400 shown in Fig. 4 may be absent. For example, the processing system 400 may have no need for display device 410 (or any associated adapters). This may be the case, for example, for particular server-side computer apparatuses which are used only for their processing capabilities and do not need to display information to users. Similarly, user input device 412 may not be required. In its simplest form, processing system 400 comprises processor 402 and main memory 404.

The data storage device 418 may include one or more machine-readable storage media (or more specifically one or more non-transitory computer-readable storage media) 428 on which is stored one or more sets of instructions 422 embodying any one or more of the methods or functions described herein. The instructions 422 may also reside, completely or at least partially, within the main memory 404 and/or within the processor 402 during execution thereof by the processing system 400, the main memory 404 and the processor 402 also constituting computer-readable storage media 428.

The various methods described herein may be implemented by a computer program. The computer program may include computer code arranged to instruct a computer to perform the functions of one or more of the various methods described herein. The computer program and/or the code for performing such methods may be provided to an apparatus, such as a computer, on one or more computer-readable media or, more generally, a computer program product. The computer-readable media may be transitory or non-transitory. The one or more computer-readable media could be, for example, an electronic, magnetic, optical, electromagnetic, infrared, or semiconductor system, or a propagation medium for data transmission, for example for downloading the code over the Internet. Alternatively, the one or more computer-readable media could take the form of one or more physical computer-readable media such as semiconductor or solid-state memory, magnetic tape, a removable computer diskette, a random-access memory (RAM), a read-only memory (ROM), a rigid magnetic disc, or an optical disk, such as a CD-ROM, CD-R/W or DVD.

The computer program is executable by the processor 402 to perform functions of the systems and methods described herein.

In an implementation, the modules, components, and other features described herein can be implemented as discrete components or integrated in the functionality of hardware components such as ASICS, FPGAs, DSPs, or similar devices.

A 'hardware component' is a tangible (e.g., non-transitory) physical component (e.g., a set of one or more processors) capable of performing certain operations and may be configured or arranged in a certain physical manner. A hardware component may include dedicated circuitry or logic that is permanently configured to perform certain operations. A hardware component may be or include a special-purpose processor, such as a field programmable gate array (FPGA) or an ASIC. A hardware component may also include programmable logic or circuitry that is temporarily configured by software to perform certain operations.

Accordingly, the phrase 'hardware component' should be understood to encompass a tangible entity that may be physically constructed, permanently configured (e.g., hardwired), or temporarily configured (e.g., programmed) to operate in a certain manner or to perform certain operations described herein.

In addition, the modules and components can be implemented as firmware or functional circuitry within hardware devices. Further, the modules and components can be implemented in any combination of hardware devices and software components, or only in software (e.g., code stored or otherwise embodied in a machine-readable medium or in a transmission medium).

### Operation of the automated storage and retrieval system

In operation, each bin 112 is given a unique identifier, which may be marked on the bin 112 using a computer-readable identifier (e.g., a barcode, quick-response code or radio-frequency identification tag) to ease identification of the bin 112. A database of the processing system 400 stores, in association with the unique identifier, the position and, optionally, content of each bin 112. When a bin 112 is moved (e.g., when it is retrieved from the grid 100), the database is updated to record its change in position.

When it is desired to retrieve a bin 112 from the grid 100, under control of the processing system 400, a robot 202, 204 is routed via the rail system 116 to the vertical column 102 including the storage cell where, according to the database, the bin 112 is positioned, and the lifting device 304, 312 is positioned (according to robot type) over the corresponding access opening 124, either adjacent or below the robot 202, 204. The robot 202, 204 lowers the gripping device 308 which engages, grips and lifts the bin 112 to the robot 202, 204. The robot 202, 204 then transports the bin 112, for example, to the drop-off port column 126, 128 for delivery to the port 130, 132 and subsequent processing external to the grid 100. In the event that the target or designated bin 112 is below other bins in the stack then the robot 202, 204 or multiple robots, which may be dedicated to the task, are controlled in a 'digging' operation to sequentially lift and reposition, temporarily or permanently, bins above the target bin 112 in order for it to be retrieved. It will be appreciated that other operations in relation to the bin 112 can be carried out in a similar manner. For example, a bin 112 can be delivered for storage in the grid 100 at the port 130, 132 of the pick-up port column 126, 128, gripped and lifted by a robot 202, 204 and delivered to the desired storage cell, bins above the desired position being repositioned if necessary as discussed above.

### Controlling lifting of containers

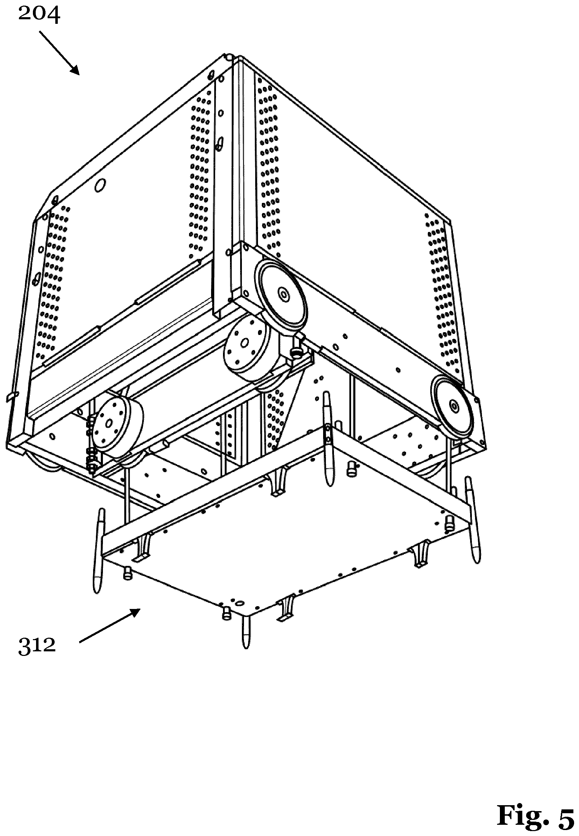

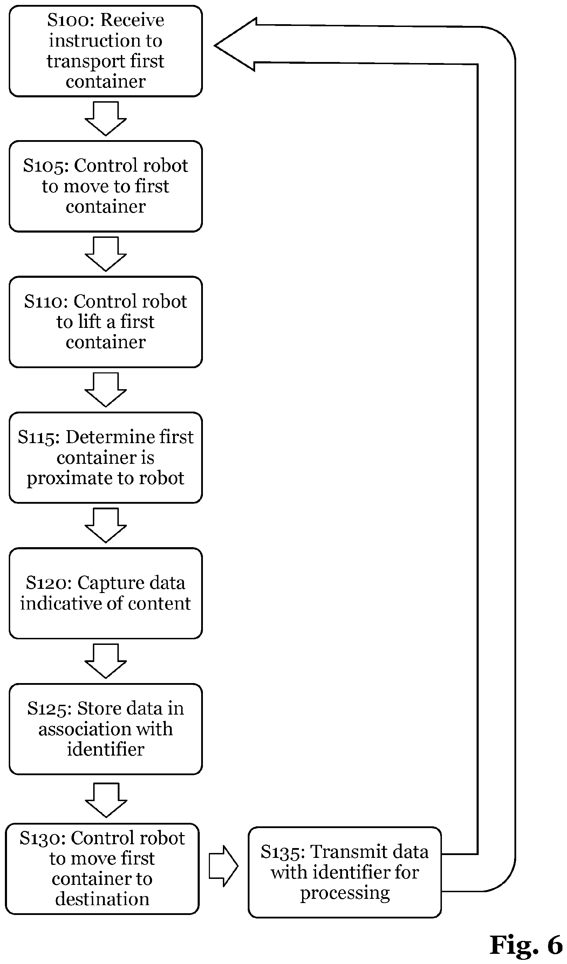

The first, 'cantilever' type of robot 202 and the second, 'internal cavity' type of robot 204 each include a lifting device 304, 312. The lifting device 312 of the second type of robot 204 is shown in Fig. 5. The robot moving on top of the grid 100 can move over a vertical column 102 of bins 112. The lifting device 304, 312 may then be lowered down to grip a bin 112 and then retracted to lift the bin 112 out of the grid 100, e.g., into the cavity 310 of the robot 204 or into a space between the cantilever element 306 of the robot 202 and the top of the grid 100. As described below with reference to Fig. 6, a sensor attached to the robot 202, 204 can be triggered to capture data by this retraction of the lifting device 304, 312. This may be a proximity-based trigger, that is configured to sense when the bin 112 has been lifted out of the grid 100.

### Collecting bin content data

Fig. 6 shows a flow diagram of a computer-implemented method, in an automated storage and retrieval system comprising a storage grid 100 including a plurality of stacked bins 112, of collecting data on bin content.

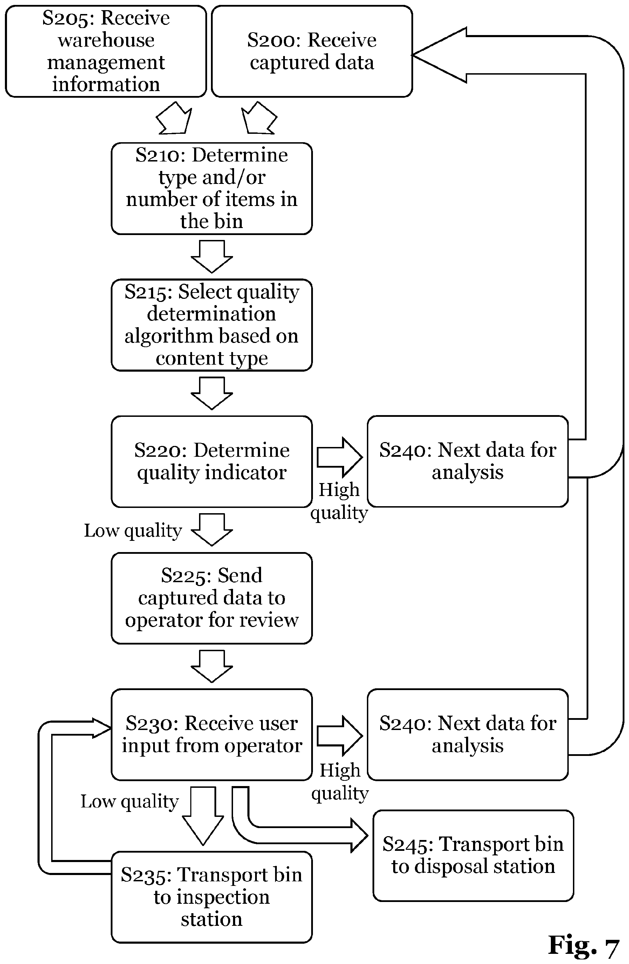

As a computer-implemented method, the method of Fig. 7 may be performed by any data processing system, including the processing system 400, and/or a data processing system on the robot 202, 204. Each of the steps of the method may thus be performed by any such data processing system.

At step S100, an instruction to transport the first bin to a destination may be received. This step may be performed by a data processing system of the robot 202, 204. The instruction may be received from the robot 202, 204 (e.g., from the processing system 400), or it may have been pre-programmed in a list of tasks for the robot 202, 204 to execute. The destination may be a storage cell in the grid 100, a position on top of the grid 100, or a destination outside the grid such as a port 300 on the edge of the grid 100 (e.g., a picking station).

Then, at step S105, the robot 202, 204 may be controlled to move to the first bin. The exact route taken by the robot 202, 204 may have been calculated separately in dependence on the geometry of the grid 100, for example. This enables the robot to be in position for lifting the bin and capturing data on its content. The controlling may comprise a data processing system (e.g., processing system 400) sending an instruction to the robot 202, 204 and/or a data processing system (e.g., a data processing system on the robot 202, 204) controlling the drive system of the robot 202, 204.

At step S110, the robot 202, 204 may be controlled on the storage grid 100 to lift a first one of the plurality of stacked bins 112 (a 'first bin') out of the storage grid 100. The lifting may be carried out by the cantilever-type robot 202 as shown in Fig. 3A, or by the cavity-type robot 204 as shown in Fig. 3B. The lifting may also be carried out by any other robot configured to transport the bin 112 from one position in the grid 100 to another. The controlling may comprise a data processing system (e.g., processing system 400) sending an instruction to the robot 202, 204, and/or a data processing system (e.g., a data processing system on the robot 202, 204) controlling the lifting device of the robot 202, 204.

As the first bin is lifted out of the storage grid 100 (e.g., from the vertical column 102) by the robot 202, 204, the first bin approaches the robot 202, 204. An appropriate, or optimal, time to capture data on its content will depend on what data is to be captured and what type of sensor is used to capture that data. The capturing of data may thus be triggered in many ways. An appropriate, or optimal, time to capture the data may, in general, be at some point after the robot 202, 204 has been controlled to lift the first bin out of the storage grid 100 and before the robot 202, 204 has been controlled to lift another bin out of the storage grid 100. As a result, the captured data can be straightforwardly associated with the bin to which it pertains because the specific bin 112 which is being lifted is already being tracked (e.g., by the processing system 400).

For example, when capturing image data, an appropriate time to capture the data may be when the first bin is at a distance that results in the image being in focus. As another example, when capturing image data, an appropriate time to capture the data may be when the first bin has not yet been completely lifted by the robot 202, 204, i.e., it has not yet reached its minimum distance with respect to the robot 202, 204 (e.g., not yet fully inside the cavity 310, for robot 204) so that ambient lighting is available. As yet another example, an appropriate time to capture the data may be when the first bin has been completely lifted by the robot 202, 204, i.e., it has reached its minimum distance with respect to the robot 202, 204; this allows data to continue to be captured even while the robot 202, 204 travels to its destination, and may allow more accurate or consistent data to be captured.

At step S115, it may be determined that the first bin is proximate to the robot 202, 204. Such a determination may, more specifically, be a determination that a position of the first bin meets a (predetermined) proximity criterion. The proximity criterion could, for example, be that the position of the first bin is within a predetermined threshold distance of the robot 202, 204.

The determination may be made using a sensor of the robot 202, 204 (e.g., in, on or mounted to the robot 202, 204), or based on a predetermined amount of time having elapsed since the robot was (first) controlled to lift the first container out of the storage grid 100.

The determination may be a determination that lifting means 304, 312 of the robot 202, 204 are in a retracted configuration. The retracted configuration may correspond to the first bin being fully lifted by the robot, or at least partially lifted. For example, the retracted configuration of the lifting device 312 shown in Fig. 5 may be when the gripping device has gripped the bin 112 and is fully back up inside the cavity 310 of the robot 202, 204.

At step S120, data is captured which is indicative of a content of the first bin. The data may be captured using a sensor of the robot 202, 204. As explained above, the capturing may be performed at any time although, in general, the capture is responsive to the controlling (or the lifting itself). The capturing may be responsive to any of the determination(s) made in step S115, e.g., responsive to determining that the first container is proximate to the robot 202, 204, that a position of the first container with respect to the robot 202, 204 meets a proximity criterion, that a predetermined amount of time has elapsed since the robot was controlled to lift the first container out of the storage grid 100, that lifting means 304, 312 of the robot 202, 204 are in a retracted configuration, etc. The types of data that may be captured will be set out in more detail below. The sensor of the robot 202, 204 may be any sensor in, on or mounted to the robot 202, 204. This sensor may be the same sensor as used in step S115, or another sensor.

At step S125, the captured data is stored in association with a unique identifier of the first bin. The manner in which the captured data is stored may depend on the type of data collected. The captured data may be stored in a database, or indeed anywhere in a memory (e.g., a transitory or temporary memory) of, or communicatively coupled to, whatever apparatus performs the storing. The captured data may be stored in a memory of the robot 202, 204.

The unique identifier may be any identifier capable of uniquely identifying the first bin. In some examples, the unique identifier is a numerical identifier, an alphabetical identifier, or a combination thereof. In some examples, the unique identifier identifies a position of the first bin in or on the grid 100 (e.g., in the form of three-dimensional coordinates); in this case, the unique identifier of the first bin changes as the first bin moves around the grid 100. The unique identifier may not directly identify the first bin; for example, the unique identifier may indicate the sequence in which the data is captured and may then identify the first bin when correlated with a sequence of bins 112 which have been lifted by the robot 202, 204. The unique identifier may be the same identifier used to track the bin in the storage and retrieval system, using processing system 400. The unique identifier may also be used in a warehouse management or inventory management system. The data and the unique identifier may be transmitted for processing at step S135 which is described in more detail below.

At step S130, the robot 202, 204 may be controlled to move the first bin 112 to the destination contained in the instruction of step S100. The controlling of step S130 may be subsequent to, or consequent to, the capturing of step S120 and/or the storing of step S125 but, more generally, will simply be subsequent to the controlling of step S110 (e.g., when the capturing continues even while the robot 202, 204 travels to its destination). As a result, the operation of the storage and retrieval system is unaffected by the data capture. In some examples, the robot 202, 204 may be controlled to move the first bin 112 to a different destination responsive to processing of the captured data, e.g., if it is determined that the bin contents are low quality for example. This is described in more detail below with reference to Fig. 7.

Capturing data about the contents of the bins 112 when the bins 112 are moved around the grid 100 allows an indication of the status of the items inside the bins 112 to be obtained during normal operation, in passing, without needing to remove the bins 112 from the system (e.g., to take them to a picking station). This enables more efficient and continuous monitoring of the contents of bins 112. This is particularly useful when the nature of the items stored is highly time-dependent, e.g., because items are perishable or because items are frequently added to or removed from the bins 112.

Depending on where the captured data is to be processed, the captured data may need to be transmitted to a(nother) data processing system (e.g., processing system 400). Thus, at step S135, the captured data maybe transmitted to a data processing system in association with the unique identifier. Alternatively, the captured data may be processed by a data processing system on the robot 202, 204 itself.

The captured data may also be transmitted to the warehouse management system for storage. This allows the captured data to be tracked over time, and stored in association with the management data for the container. For example, the warehouse management system may store one or more of the most recent image(s) of the container content, one or more of the most recent temperature reading(s), or one or more of the most recent weight reading(s).

In one example, the robot 202, 204 is controlled through instructions transmitted via a first network, the captured data is transmitted via a second network, and the first and second networks are different. As a result, transmission of the captured data does not disrupt traffic on the network that controls movement of the robot 202, 204, and vice versa. This may be a particular consideration when many vehicles operate on the grid 100, or when a large amount of data is captured and transmitted, for example. In another example, the robot is controlled through instructions transmitted with a first network traffic priority (e.g., a first quality of service, QoS), the captured data is transmitted with a second network priority (e.g., a second quality of service, QoS), and the second network traffic priority is lower than the first network priority. That is, the instructions controlling the movement of robots on the grid 100 are transmitted in preference over the captured data. As a result, non-essential, captured data does not interrupt the flow of instructions and impede the movement of robots 202, 204 on the grid 100.

### Bin content data types

The type of data captured by the sensor at step S120 may depend on the type of items (or 'products') that are stored in the bins 112 in the grid 100. For example, different data may be useful for monitoring fresh produce versus clothing and apparel. The type of data collected can therefore be chosen in dependence on the expected contents of the bin.

As one example, the sensor may be a camera capturing one or more optical images. Image recognition and processing algorithms can therefore be applied in order to analyse the data. These are described in more detail below with reference to Fig. 7.

As another example, the sensor may be an infrared camera capturing one or more infrared images.

As yet another example, the sensor may capture air composition data. Similarly, humidity data or temperature data may be captured. This may be useful when the bins store fresh produce or plants, for example. In a further example, the sensor may capture a mass or weight measurement of the container including its content (from which the mass or weight of the content may be derived by subtracting a predetermined container weight), or of the container content.

These types of sensors and captured data may be used independently, or in any combination.

Fig. 7 shows a flow diagram of a computer-implemented method of processing data on bin content that may be performed on the data captured using the method shown in Fig. 6, or any other data on bin content. The steps of Fig. 7 may thus be performed independently, or in combination with those of Fig. 6 - thus resulting in a method of collecting and processing data on bin content.

As a computer-implemented method, the method of Fig. 7 may be performed by any data processing system, including the processing system 400, and/or a data processing system on the robot 202, 204. Each of the steps of the method may thus be performed by any such data processing system.

### Determination of bin content

At step S200, captured data indicative of a content of the first bin is received. The data may be received from any source. For example, the data may be received at a data processing system (e.g., processing system 400) from whatever apparatus performed step S120 or, if performed, step S135. As another example, the data maybe received internally at a data processing system on the robot 202, 204 (e.g., when step S135 is omitted).

At step S205, which may be performed in parallel with step S200, warehouse management information may also be received, e.g., from an inventory database of the automated storage and retrieval system. This could include information regarding stock levels and the expected content of the first bin, for example. It could also include information regarding the expected (but unverified) type of the content of the first bin. In yet another example, the warehouse management information may include an image of the bin content. In yet another example, the warehouse management information may include data from an earlier (e.g., the previous) data capture for comparison (e.g., an earlier image of the bin content, or an earlier weight of the container and its content or of the container content).

At step S210, at least one type of item and/or a number (or 'quantity') of items in the first bin may be determined. In some examples, this determination is made by reading from the warehouse management information, thus indicating what is *expected* to be in the first bin. In some examples, this determination is additionally or alternatively based on the captured data, thus indicating what is likely to *actually* be in the first bin. This is described in more detail below.

The type of item(s) may be determined at varying levels of specificity depending on the content of the bins 112. For example, in a grocery context, the types could include 'fruit & vegetables', 'meat & fish', etc., or could be more specific and include 'carrots', `peaches', 'cod', 'beef, etc.

The type of produce may also be determined from an image of the bin contents by using character recognition. This can be used to read a barcode or other product information from the packaging of an item, for example.

When bins 112 store multiple types of items, a plurality of types of items in the first bin may be determined. When bins 112 store only one type of item, a (single) type of item in the first bin may be determined.

When the captured data is an image, the type of the items may be determined using image classification. For example, a machine learning model may be trained to recognise the content of the bin from a predetermined set of options.

When there are multiple types of items in the first bin, the determining of the number of items in the first bin may be a determination of how many of each type of item there are in the first bin.

Any of the above approaches for determining the type or number of items in the first bin may be used independently, or in any combination.

The method of Fig. 7 may also comprise identifying a discrepancy between an expected number of items and the determined number of items in the first bin, or between at least one expected type of items and the determined at least one type of items in the first bin. There may for example be a different number of items in the bin than expected according to the warehouse management information.

Similarly, the method of Fig. 7 may additionally or alternatively comprise comparing the captured data to expected content data for the first bin and, responsive to the comparing, identifying a discrepancy between the expected content data and the captured data.

The expected content data may be a previous image or other previously captured data. Identifying a discrepancy may therefore comprise determining that there has been a change in the content data, or a change which meets a predetermined significance criterion, since the last time data was captured.

If a discrepancy is identified in any manner, the discrepancy can be flagged to an operator for (manual) confirmation, or a message can be sent back to the warehouse management system for an inventory database to be updated.

### Determination of bin content quality

In an automated storage and retrieval system, the quality of items stored may change - and in particular deteriorate - over time. For example, perishable items may spoil, thus in turn spoiling other adjacent items. The method of Fig. 7 may therefore determine a quality of the item(s) in the first bin.

The manner in which the quality is determined may depend on which type of item is determined to be in the first bin. In this case, at step S215, a quality determination algorithm may be selected in dependence on the determined type(s) of item in the first bin. The selected quality determination algorithm is then used to determine the quality indicator in step S220. For example, if at a first stage the type of item in the first bin is determined to be fresh produce, the selected algorithm may be an algorithm to determine whether the produce is spoiled. Otherwise, if a shelf-stable item is determined to be in the first bin, the selected algorithm may be an algorithm to read a 'best-before' or expiry date marked on the item (e.g., using optical character recognition). As yet another example, a machine learning model could be trained in order to determine when fresh produce has become spoiled or rotten, or when glass is broken, and the selected algorithm could apply the machine learning model. As yet another example, fruit and vegetables release various different gases (e.g, ethylene) as they ripen and begin to spoil, and one or more of these gas levels could therefore be measured using a sensor as below, and the selected algorithm may compare these levels to respective threshold values to determine a quality indication as to the freshness of the produce.

At step S220, a quality indicator for the content of the first bin may be determined based on the captured data. The quality indicator may be 'good' or 'bad', or `low', 'medium' and/or 'high'. Alternatively, the quality indicator may be a numeric value, which may be within a predetermined range. For example, the quality indicator could be an integer with a value between 0 and 10 or 100, where a higher value indicates a higher quality, or vice versa. When `low' quality is referred to herein, this may mean a 'bad' or `low' quality indicator has been determined, or a quality indicator within a predetermined low quality range has been determined. Similarly, when 'high' quality is referred to herein, this may mean a 'good' or 'high' quality indicator has been determined, or a quality indicator within a predetermined high quality range has been determined.

Determining the quality indicator may also comprise comparing the captured data to at least one of: expected content data for items of an acceptable quality; expected content data for items of a low quality; or expected content data for items of a high quality. For example, in the case where a temperature reading is an indication of quality, an expected temperature range for low, acceptable and high quality items may be defined and the quality indication determined based on which range the captured data falls within.

The quality indicator may be determined using image classification. This may be useful if, for example, a low quality item is visibly different to a high quality item.

The quality indicator may be stored and monitored over time. This could then enable the prediction of how quickly items will become low quality. This information may then be used to prioritise items for picking before they become low quality or encourage sales of that item in the future for example. The quality indicator may therefore be sent to the warehouse management system for storage.

### Handling of low quality content

Once a quality indicator has been determined, this may be used as a guide for a human to review the bin content. At step S225, therefore, responsive to determining that the quality indicator indicates low quality for the content of the first bin, at least a portion of the captured data may be sent to an operator for review. The quality indicator may therefore be used to trigger a more thorough, reliable or accurate inspection of the captured data (e.g., image data), but such an inspection need not be performed when the quality of the content of the first bin has been determined to be high, thus reducing the need for operator review. Whether step S225 is performed may depend on the data captured and the likelihood that an operator will be able to accurately assess quality from the data. For example, it may not be useful or necessary for an operator to check a 'best-before' date, but it may be possible for the operator to provide a more accurate assessment of whether produce has spoiled. Alternatively, responsive to determining that the quality indicator indicates low quality for the content of the first bin, at step S245, the robot 202, 204 may be controlled to transport the first bin to a disposal station.

At step S230, user input may be received from the operator regarding a quality of the content of the first bin. This could take a variety of forms. The user input may include a simple confirmation or rejection of the quality indicator. The user input may additionally or alternatively include a request to manually inspect the first bin (e.g., at an inspection station), either at that time, or whenever the first bin is next moved to an inspection station. The user input may additionally or alternatively include a degree to which the operator is certain of the quality of the content.

In the case where the user input indicates a low degree of certainty with regard to the quality of the content of the first bin, or the user input comprises a request to inspect the first bin, at step S235, the robot 202, 204 may be controlled to transport the first bin to an inspection station. The format and timing of the request would be dependent on the configuration of the storage and retrieval system. In some examples, an inspection station may be a dedicated port 300 to which the bin is presented and inspected by an operator. In other examples, a picking port may be used and the bin flagged to the operator to indicate that items do not need to be picked from the bin but simply inspected.

Where the user input of step S230 or the determination of step S220 indicates that the content of the first bin is of acceptable quality, it may be refrained from controlling the robot 202, 204 to transport the first bin to an inspection station. The system therefore continues to operate as normal following confirmation that the quality of the item(s) in the bin is acceptable to be kept in the grid 100. This is shown at step S240 of Fig. 7. As a result, data may be captured when bins are moved from one position to another within the grid 100, and the bins 112 do not always need to be presented to an operator or an inspection station in order to determine the quality of items.

Where the user input indicates that the content of the first bin is not of acceptable quality or the user input comprises a request to dispose of the content of the first bin, at step S245, the robot 202, 204 may be controlled to transport the first bin to a disposal station. As a result, spoiled items may automatically be disposed of, without otherwise interrupting the flow of bins around the grid 100. The disposal station may be a dedicated trash port at which bin content is disposed of. It may alternatively be a picking port, at which the bin is presented with an instruction for the operator to remove the low quality item from the bin. The whole content of the bin may be disposed of, or alternatively only items determined to be of low quality may be disposed of, with other items remaining in the bin.

The warehouse management information may be updated to reflect the quality determination, either with the result of the quality indicator determination and/or confirmation from an operator. The warehouse management information or inventory may also be updated if the bin is moved to a disposal station and the content removed from the bin.

Once completed, either of the methods of Figs. 6 and 7 may be repeated. The methods of Figs. 6 and 7 may be repeated with the same first bin (at a later time), or with another one of the bins 112. Additionally or alternatively, the methods of Figs. 6 and 7 may be repeated with the bin being handled (lifted, transported, etc.) by another one of the robots 202, 204. The repetition of these methods may be at a frequency that depends on the type of item determined at step S210; as a result, items that are more perishable or otherwise more prone to spoilage may be inspected more frequently.

### Hardware and software implementations

The methods shown in Figs. 6 and 7 may be performed by a data processing system configured to perform the method(s). The data processing system may comprise any of the components of processing system 400 shown in Fig. 4, such as one or more processors 402 configured to perform the method(s). The data processing system may be on board a robot 202, 204. The method(s) may be split so that different steps are performed by different data processing systems. Any of steps S200-S225, which may be relatively computationally intensive, may for example be performed in a cloud computing environment.

The method may be performed by a data processing system configured to execute instructions stored on a computer-readable medium, which may be transitory or non-transitory.

The data processing system may form part of an automated storage and retrieval system, which may in turn comprise any of the above robot(s); the first bin; the plurality of stacked bins; and/or the storage grid.

### Penultimate comments

The examples described herein are with reference to a vertically-stacked system in which the bins 112 are arranged in vertical stacks and are lifted off the top of each stack. It will be appreciated, however, that the present method may be applied in a system in which bins 112 are arranged in horizontal stacks, and digging is performed by moving bins 112 out of the way in a horizontal direction in order to access bins 112 stored behind them.

The examples described herein are with reference to a data capturing sensor on the robot 202, 204. It will be appreciated however, that sensor(s) can instead be placed above the grid 100, and thus be in a position to capture data for more bins 112 and robots 202, 204, and/or within each bin 112, thus allowing data to be captured at any time and without the need to be triggered as in step S115.

Unless otherwise indicated, the steps of the method(s) described herein need not be performed in the order set out above, and may be performed in any order. For example, step S130 may be performed before step S120 (i.e., data may be captured while the robot 202, 204 is in movement), or before step S125 (i.e., data may be stored while the robot 202, 204 is in movement). The steps of the method of Fig. 7 need not be performed after the steps of Fig. 6. For example, steps S200 to S220 could be performed before the first bin reaches its destination after being controlled to move there in step S130.

Similarly, unless otherwise indicated, the steps of the method(s) described herein may be omitted, combined or performed in parallel. For example, data can be captured without the robots moving on the grid 100, and thus steps S100, S105, and S130 may be omitted. As another example, data may be captured and processed on a same data processing system, and so step S135 may be omitted. As yet another example, warehouse management information is not required to process the captured data, and so step S205 may be omitted. As yet another example, useful information on bin content may be obtained by performing only some of the determinations of Figs. 7, and so any of steps S210, S215, S220 may be omitted.

Examples of the present disclosure are set out below.

There is provided a computer-implemented method, in an automated storage and retrieval system comprising a storage grid including a plurality of stacked containers, of collecting data on container content.

The method optionally comprises controlling a robotic vehicle on the storage grid to lift a first one of the plurality of stacked containers out of the storage grid.

The method comprises capturing data indicative of a content of the first container.

Optionally, the data is captured using a sensor of the robotic vehicle.

Optionally, the capturing is responsive to the controlling.

The method further comprises storing the captured data in association with a unique identifier of the first container.

Optionally, the data is captured responsive to determining that a position of the first container with respect to the robotic vehicle meets a proximity criterion.

Optionally, the data is captured responsive to determining that a lifting device of the robotic vehicle is in a retracted configuration.

Optionally, further comprising:
prior to the controlling:
receiving an instruction to transport the first container to a destination, and
controlling the robotic vehicle to move to the first container; and subsequent to the capturing:
   controlling the robotic vehicle to move the first container to the destination.

Optionally, further comprising transmitting the captured data to a data processing device in association with the unique identifier.

Optionally, at least one of:
the robotic vehicle is controlled through instructions transmitted via a first network and the captured data is transmitted via a second network; or
the robotic vehicle is controlled through instructions transmitted with a first network traffic priority and the captured data is transmitted with a second network priority, and the second network traffic priority is lower than the first network priority.

Optionally, the captured data comprises at least one of:
one or more optical images,
one or more infrared images,
air composition data,
humidity data,
weight data, or
temperature data.

Optionally, further comprising determining at least one type of item in the first container.

Optionally, the determining of the at least one type of item in the first container is based on at least one of:
an inventory database of the automated storage and retrieval system; or
the captured data.

Optionally, the determining of the at least one type of item in the first container is performed using image classification.

Optionally, further comprising determining, based on the captured data, a number of items of each of the at least one types of item in the first container.

Optionally, further comprising determining, based on the captured data, a number of items in the first container.

Optionally, further comprising identifying a discrepancy between an expected number of items and the determined number of items in the first container.

Optionally, further comprising determining, based on the captured data, a quality indicator for the content of the first container.

Optionally, the determining of the quality indicator is performed using image classification.

Optionally, the determining of the quality indicator comprises:
selecting, from a plurality of algorithms, a quality determination algorithm in dependence on the determined at least one type of item in the first container; and
applying the selected quality determination algorithm to determine the quality indicator.

Optionally, further comprising, responsive to determining that the quality indicator indicates low quality for the content of the first container, sending at least a portion of the captured data to an operator for review.

Optionally, further comprising receiving user input from the operator regarding a quality of the content of the first container.

Optionally, the user input indicates a low degree of certainty with regard to the quality of the content of the first container or the user input comprises a request to inspect the first container, and the method further comprises, responsive to the user input, controlling the robotic vehicle to transport the first container to an inspection station.

Optionally, the user input indicates that the content of the first container is of acceptable quality, and the method further comprises, responsive to the user input, refraining from controlling the robotic vehicle to transport the first container to an inspection station.

Optionally, the user input indicates that the content of the first container is not of acceptable quality or the user input comprises a request to dispose of the content of the first container, and the method further comprises controlling the robotic vehicle to transport the first container to a disposal station.

Optionally, further comprising:
comparing the captured data to expected content data for the first container; and
responsive to the comparing, identifying a discrepancy between the expected content data and the captured data.

Optionally, the determining of the quality indicator comprises comparing the captured data to at least one of:
expected content data for items of an acceptable quality;
expected content data for items of a low quality; or
expected content data for items of a high quality.

There is provided a data processing system configured to perform any of the methods described herein.

There is provided a computer-readable medium comprising instructions which, when executed by a data processing system, cause the data processing system to perform any of the methods described herein.

There is provided an automated storage and retrieval system comprising at least one of a data processing system and a robotic vehicle, the automated storage and retrieval system being configured to perform any of the methods described herein.

Optionally, the automated storage and retrieval system comprises at least one of:
the first container;
the plurality of stacked containers; or
the storage grid.

It is to be understood that the above description is intended to be illustrative, and not restrictive. Many other implementations will be apparent to those of skill in the art upon reading and understanding the above description. Although the present disclosure has been described with reference to specific example implementations, it will be recognized that the disclosure is not limited to the implementations described, but can be practiced with modification and alteration within the spirit and scope of the appended claims. Accordingly, the specification and drawings are to be regarded in an illustrative sense rather than a restrictive sense. The scope of the disclosure should, therefore, be determined with reference to the appended claims, along with the full scope of equivalents to which such claims are entitled.

## Claims

1. A computer-implemented method, in an automated storage and retrieval system comprising a storage grid including a plurality of stacked containers, of collecting data on container content, comprising:
controlling a robotic vehicle on the storage grid to lift a first one of the plurality of stacked containers out of the storage grid;
responsive to the controlling, capturing data indicative of a content of the first container using a sensor of the robotic vehicle; and
storing the captured data in association with a unique identifier of the first container.

2. The method of claim 1, wherein the data is captured responsive to determining that a position of the first container with respect to the robotic vehicle meets a proximity criterion.

3. The method of any preceding claim, further comprising:
prior to the controlling:
receiving an instruction to transport the first container to a destination, and
controlling the robotic vehicle to move to the first container; and subsequent to the capturing:
controlling the robotic vehicle to move the first container to the destination.

4. The method of any preceding claim, further comprising transmitting the captured data to a data processing device in association with the unique identifier.

5. The method of any preceding claim, wherein the captured data comprises at least one of:
one or more optical images,
one or more infrared images,
air composition data,
humidity data,
weight data, or
temperature data.

6. The method of any preceding claim, further comprising determining at least one type of item in the first container.

7. The method of claim 6, wherein the determining of the at least one type of item in the first container is based on at least one of:
an inventory database of the automated storage and retrieval system; or
the captured data.

8. The method of any preceding claim, further comprising determining, based on the captured data, a number of items in the first container.

9. The method of claim 8, further comprising identifying a discrepancy between an expected number of items and the determined number of items in the first container.

10. The method of any preceding claim, further comprising determining, based on the captured data, a quality indicator for the content of the first container.

11. The method of claim 10 when dependent on claim 6, wherein the determining of the quality indicator comprises:
selecting, from a plurality of algorithms, a quality determination algorithm in dependence on the determined at least one type of item in the first container; and
applying the selected quality determination algorithm to determine the quality indicator.

12. The method of any of claims 10 to 11, further comprising, responsive to determining that the quality indicator indicates low quality for the content of the first container, sending at least a portion of the captured data to an operator for review.

13. The method of any preceding claim, further comprising:
comparing the captured data to expected content data for the first container; and
responsive to the comparing, identifying a discrepancy between the expected content data and the captured data.

14. A data processing system configured to perform the method of any preceding claim, or
a computer-readable medium comprising instructions which, when executed by a data processing system, cause the data processing system to perform the method of any preceding claim.

15. An automated storage and retrieval system comprising at least one of a data processing system and a robotic vehicle, the automated storage and retrieval system being configured to perform the method of any of claims 1 to 13, and the system optionally further comprising at least one of:
the first container;
the plurality of stacked containers; or
the storage grid.
